# EUROPÄISCHE PATENTSCHRIFT

(11) **EP 2 421 407 B1**
(45) Veröffentlichungstag und Bekanntmachung des Hinweises auf die Patenterteilung: **12.11.2014**
(21) Anmeldenummer: 10721929.7
(22) Anmeldetag: 11.02.2010
(51) Int. Cl.: A47B 96/06, A47F 5/00

(54) **AUFBEWAHRUNGSSYSTEM FÜR EINEN LADERAUM EINES KRAFTFAHRZEUGS**
STORAGE SYSTEM FOR THE LOADING SPACE OF A VEHICLE
SYSTÈME DE RANGEMENT DESTINÉ À L'ESPACE DE CHARGEMENT D'UN VÉHICULE AUTOMOBILE

(30) Priorität: 24.04.2009 DE 102009018524
(43) Veröffentlichungstag der Anmeldung: 29.02.2012
(73) Patentinhaber: Werner, Thomas, 22359 Hamburg (DE)
(72) Erfinder: Werner, Thomas, 22359 Hamburg (DE)
(74) Vertreter: Scheffler, Jörg
(86) Internationale Anmeldenummer: PCT/DE2010/000157
(87) Internationale Veröffentlichungsnummer: WO 2010/121585

(56) Entgegenhaltungen:
- DE-U1- 8 518 079
- US-A- 3 112 034

## Beschreibung

Die Erfindung betrifft ein zur Anordnung in einem Laderaum eines Kraftfahrzeugs bestimmtes Aufbewahrungssystem.

Im Stand der Technik ist es bekannt, in Liefer- oder Servicefahrzeugen Regaleinheiten oder Container im Innenraum des Fahrzeugs festzulegen. Diese Einheiten werden entweder im Bodenbereich über Winkelelemente oder an den vertikalen Innenraumwänden des Fahrzeugs mittels Verschraubung oder dergleichen festgelegt. Solche Regale umfassen Regalböden, Wannen, Schubladen oder Regalboxen. Natürlich müssen jegliche Gegenstände, die in einem Fahrzeug mitgeführt werden, so im Fahrzeug festgelegt sein, dass sie dort nicht umfallen oder sich verschieben können. Diesem Erfordernis steht nachteilig gegenüber, dass das Herausnehmen von Gegenständen aus dem Fahrzeug damit oft schwierig und arbeitsaufwendig ist.

Es sind im Allgemeinen auch Regalsysteme für Servicefahrzeuge bekannt, bei denen zwischen vertikal angeordneten Regalholmen verschiedene Regaleinsatzelemente wie beispielsweise Regalböden, Wannen, Schubfächer, Regalboxen und dergleichen fixierbar sind.

Die DE 103 47 750 A1 betrifft ein Regalsystem, insbesondere für den mobilen Einsatz in einem Fahrzeug, bestehend aus vertikal aufzustellenden Regalholmen und zumindest einem horizontal anzuordnenden Einsatzteil zur gegenseitigen Verstrebung der Regalholme, die durch eine form- und kraftschlüssige Aufnahme des Einsatzteils an einer Ansatzfläche des jeweiligen Regalholms verbunden sind. Hierzu ist vorgesehen, dass in der Ansatzfläche eine Nut vorgesehen ist und das Einsatzteil an seiner Gegenfläche eine Nase aufweist, die im montierten Zustand in die Nut greift. Die Ansatzfläche des Regalholms erstreckt sich über die gesamte Höhe des Regalholms, sodass die form- und kraftschlüssige Aufnahme eines Einsatzteils in beliebiger Höhe an dem Regalholm möglich ist.

Die DE 20 2005 007 189 U1 betrifft eine Arretiervorrichtung zum lösbaren Verankern einer mobilen Stauraumeinheit, wie beispielsweise eines Regals oder Containers, an einer Innenwand eines Transporterfahrzeugs. Der rollbare Regalwagen oder Container ist mit einer lösbaren Schnellverriegelung positionssicher in dem Kraftfahrzeug festlegbar. Hierzu ist eine Arretiervorrichtung vorgesehen, mit der der Rollencontainer bzw. das mobile Rollenregal lösbar an der Innenwand des Fahrzeugs verankert wird. Zum einfachen Verriegeln ist vorgesehen, dass eines der beiden Verriegelungselemente eine in einem Fangmaul angeordnete Drehklinke aufweist. Das hierzu komplementäre zweite Verriegelungselement weist einen Bolzen auf, der in das Fangmaul eingeschoben werden kann und dabei die Drehklinke betätigt.

Die DE 20 2004 020 506 U1 betrifft ein Regaleinsatzelement für ein Regal, bei dem Regaleinsätze an vertikal angeordneten Regalholmen festlegbar sind und das für den Einsatz in einem Servicefahrzeuge bestimmt ist. Bei dem Regaleinsatzelement weist das Einsatzelement einen Boden mit mindestens einer Seitenwand auf, wobei die Seitenwand schwenkbar am Boden angelenkt ist. So ist es möglich, mindestens eine Seitenwand des Einsatzelements für einen im Regal montierten Zustand nach oben zu klappen.

Die DE 103 47 749 A1 betrifft eine Regalwanne, die mit Hilfe von Trennwänden in einzelne Fächer unterteilbar ist, wobei die zum Festlegen der Trennwand bestimmte Regalwannenwand nach innen gebördelt ist und mindestens einen vertikalen Schlitz in dem nach innen gebördelten Abschnitt aufweist, in den ein Trennwandhalter einsetzbar ist, der sich von der gebördelten Regalwannenoberkante bis zum Regalwannenboden erstreckt und dort abstützt. Der Trennwandhalter weist zum Halten der Trennwand zwei zueinander parallele Stege auf, zwischen die die Trennwand einschiebbar ist.

Die DE 10 2004 005 362 A1 betrifft ein Regal-Boxen-System mit einem Regal und mindestens einer herausnehmbaren Regalbox, wobei eine Arretiervorrichtung vorgesehen ist, mit der die Box in Ausziehrichtung der Box auf einem Regalboden arretierbar ist. Die Regalbox lässt sich nur nach Betätigen der Arretiervorrichtung ausziehen, sodass sich die Box weder durch Rüttelbewegungen des Fahrzeugs noch in einer Kurvenlage desselben aus dem Regal bewegen kann. Zum Lösen der Arretierung in der jeweiligen Arretierposition ist die Box um eine Achse quer zur Ausziehrichtung der Regalbox zu kippen.

Die DE 103 00 130 A1 betrifft eine Halterung für Waren im Laderaum eines Fahrzeugs. Um unkontrollierte Hin- und Herbewegungen der Waren bel der Fahrt zu vermelden, sind Seitenteile mit Befestigungsmitteln zur lösbaren Befestigung im Laderaum und einem zwischen ihnen derart aufgespannten Gewebe, das zwischen den Seitenteilen eine nach oben offene Wanne bildet, vorgesehen. Im nicht benutzten Zustand lassen sich die beiden steifen Seitenteile gegeneinander drücken, wodurch das Gewebe zwischen den Seitenteilen zusammengefaltet bzw. zusammengepresst wird.

Ferner lassen sich größere Gegenstände mit Hilfe einer Verzurrschiene, wie sie beispielsweise durch die DE 102 54 505 A1 bekannt ist, mittels Spannriemen oder dergleichen im Fahrzeuginnenraum sichern, indem der Spannriemen an der Verzurrschiene eingehängt wird und das Spannband einen zu haltenden Gegenstand umgreift.

Weiterhin ist ein Möbel für Werkstatteinrichtungen in Fahrzeugen mit mindestens einem Fach und mit einer das Fach verschließenden Klappe aus der DE 200 01 969 U1 bekannt. Die Klappe ist an ihrer von der Achse abgewandten Seite mit einem Vorsprung versehen und liegt in der Offenstellung nur mit dem Vorsprung an der Bezugsfläche an. Hierdurch hat die Vorderseite der Klappe einen Abstand von der Bezugsfläche, sodass sie nicht in direkten Kontakt mit der Bezugsfläche kommt, um zu verhindern, dass die Vorderseite der Klappe verschmutzt oder beschädigt werden kann.

Die US 3,112,034 A bezieht sich auf ein zur Anordnung in einem Laderaum eines Kraftfahrzeugs bestimmtes Aufbewahrungssystem, insbesondere auf eine Haltestruktur. Dabei dienen die horizontalen Führungen der Aufnahme von Behältern.

Die DE 85 18 079 U1 beschreibt ein Aufbewahrungssystem für Hängekästen, die zwischen einem Aufhängeblech und einem Leistenabschnitt verklemmt werden.

Als nachteilig erweist sich bei den bisher bekannten Aufbewahrungssystemen die in der Praxis umständliche Handhabung. Oftmals muss beispielsweise bei Lieferfahrzeugen die Fixierung des Ladeguts bis zur Auslieferung aller Ladegüter mehrfach geändert werden. Weiterhin werden verschiedene Ladegüter oftmals nach ihrem Gewicht oder ihren Abmessungen geordnet im Laderaum untergebracht, mit der Folge, dass einzelne Ladegüter einer gemeinsamen Lieferung verstreut in dem Fahrzeug untergebracht sein können und daher bei der Auslieferung zusätzlichen Zeitaufwand verursachen. Außerdem kommt es dabei leicht zu Fehlern. Insgesamt ergeben sich somit ungünstige Arbeitsabläufe beim Be- und Entladen des Kraftfahrzeugs.

Der Erfindung liegt die Aufgabe zugrunde, eine Möglichkeit zu schaffen, ein einfach zu handhabendes und zugleich mit geringem Aufwand herzustellendes Aufbewahrungssystem für den mobilen Einsatz in Kraftfahrzeugen zu schaffen.

Diese Aufgabe wird erfindungsgemäß mit einem Aufbewahrungssystem gemäß den Merkmalen des Anspruchs 1 gelöst. Die weitere Ausgestaltung der Erfindung ist den Unteransprüchen zu entnehmen.

Erfindungsgemäß hat also ein Aufbewahrungssystem zumindest eine insbesondere horizontal fixierbare Halteschiene mit in regelmäßigen Abständen angeordneten, insbesondere vertikalen Vorsprüngen, zumindest eine Auflageschiene mit einer horizontalen Auflagefläche sowie mehrere Aufbewahrungselemente, insbesondere Behälter, mit zumindest zwei entlang einer Geraden in einem hinteren Randbereich jedes Aufbewahrungselements angeordneten Ausnehmungen, die so bemessen sind, dass die Ausnehmungen in der Halteposition jeweils einen Vorsprung einschließen und zugleich die Aufbewahrungselemente auf der Auflagefläche der Auflageschiene aufliegen, wobei die Halteschiene oder die Auflageschiene an den vertikalen Holmen beweglich und in verschiedenen vertikalen Positionen festlegbar ist, sodass eine einfache Anpassung an Aufbewahrungselemente mit unterschiedlicher Höhe durch eine Änderung des Abstands zwischen der oberen Halteschiene und der unteren Auflageschiene ermöglicht wird. Hierdurch wird es in überraschend einfacher Weise möglich, einzelne oder mehrere Ladegüter in dem jeweils zur Aufnahme geeinigten, insbesondere gemeinsamen Aufbewahrungselement außerhalb des Kraftfahrzeugs bereitzustellen und zu kommissionieren sowie das so zur Auslieferung bereitgestellte Ladegut durch Einhängen des Aufbewahrungselements mit seinen Ausnehmungen in die jeweils passenden Vorsprünge sicher im Laderaum unterzubringen. Die Erfindung geht dabei von der Erkenntnis aus, dass nicht etwa ein Aufbewahrungssystem mit festen oder schwenkbaren Regalböden für die vorübergehende Unterbringung des Ladeguts optimale Arbeitsabläufe ermöglicht, sondern vielmehr die erfindungsgemäße Fixiermöglichkeit von fahrzeugunabhängigen Aufbewahrungselementen einen entscheidenden Vorteil bietet. Diese Aufbewahrungselemente können nämlich in nahezu beliebiger Ausführungsform, insbesondere unterschiedlichsten Abmessungen, entsprechend der Beschaffenheit der jeweiligen Ladegüter sowie der Einsatzbedingungen bereitgestellt werden, wobei lediglich das durch die Vorsprünge bestimmte Rastermaß der Ausnehmungen eingehalten werden muss. Darüber hinaus können beliebige Aufbewahrungselemente eingesetzt werden, insbesondere offene Behälter oder Wannen, Gitterboxen, verschließbare Behälter zur Aufnahme von Flüssigkeiten oder auch spezielle Behälter zum Transport von erschütterungsempfindlichen Gegenständen, von verderblichen Waren oder auch von lebenden Tieren. Die Aufbewahrungselemente können in einer beliebigen Position in dem Laderaum untergebracht werden, weil lediglich das Rastermaß durch die Abstände der Vorsprünge vorbestimmt ist, sodass sich dadurch ohne weitere logistische Überlegungen eine effiziente Nutzung des verfügbaren Laderaums ergibt. Zugleich wird erfindungsgemäß auch eine wesentlich bessere Raumausnutzung realisiert, weil das Aufbewahrungssystem dem Verlauf der Laderaumwand problemlos angepasst werden kann und keine unerwünschten, nicht nutzbaren Zwischenräume entstehen. Außerdem ergibt sich zugleich eine einfache Möglichkeit zur Kennzeichnung der Aufbewahrungselemente in einer für das Servicepersonal zweckmäßigen, insbesondere also gut ablesbaren Position, sodass die Suche nach dem jeweiligen Aufbewahrungselement bei der Anlieferung entfällt.

Dabei erweist es sich als praxisgerecht, wenn die Ausnehmungen jeweils eine Durchbrechung aufweisen, sodass die Kontaktfläche nicht an der Stirnfläche bzw. Kopfseite des jeweiligen Vorsprungs, sondern zwischen dem die Durchbrechung einschließenden Randbereich und der die Vorsprünge tragenden Halteschiene entsteht, sodass die Kontaktfläche vergrößert ist.

Die Halteschiene könnte unmittelbar an der Laderaumwand angebracht werden, um so einen geringen Platzbedarf sicherzustellen. Besonders zweckmäßig ist es hingegen, wenn die Halteschiene und die Auflageschiene mittels eines Holms an einer Laderaumwand fixierbar sind, sodass einerseits eine hohe Belastbarkeit der so geschaffenen Tragkonstruktion aus einander kreuzenden Halteschiene, Auflageschiene und Holmen erreicht und anderseits die Fixierung innerhalb des Fahrzeuges vereinfacht werden kann, insbesondere auf wenige Fixierpunkte des jeweiligen Holms an der Wand, dem Boden oder der Decke des Laderraums beschränkt werden kann.

Eine andere, ebenfalls besonders Erfolg versprechende Abwandlung wird auch dadurch geschaffen, dass zumindest einzelne der Vorsprünge eine in Richtung des Fahrzeughecks vorspringende Ausformung aufweisen. Diese Ausformung bestimmt zusammen mit der Breite des Vorsprungs die minimale lichte Weite der Ausnehmung des Aufbewahrungselements. Auf diese Weise ist also das Aufbewahrungselement entsprechend der Länge der Ausformung in Richtung des Fahrzeughecks verschiebbar. Bei einem scharfen Bremsmanöver ebenso wie bei einem Aufprall des Kraftfahrzeugs auf ein Hindernis kommt es somit zu dieser Verschiebung des Aufbewahrungselementes nach vorn, wobei die Ausformung nunmehr eine Hinterschneidung bildet und einer vertikalen Bewegungskomponente entgegenwirkt, die anderenfalls zu einem Lösen des Aufbewahrungselements von der Halteschiene führen könnte. Die Ausformung bildet somit eine selbsttätig wirksame Transportsicherung, wobei in der Praxis eine Länge der Ausformung - gemessen von der Richtung des Fahrzeughecks weisenden Kante des Vorsprungs - zwischen 0,5 cm und 5 cm, insbesondere zwischen 1 cm und 3 cm als ausreichend angesehen wird.

In der Praxis bildet jeder Vorsprung mit der Ausformung eine einstückige Einheit, die beispielsweise durch Stanzen hergestellt werden kann. Dabei ist es besonders Erfolg versprechend, wenn zumindest einzelne der Vorsprünge als Winkelstücke mit einem unteren vertikalen Schenkel und einem oberen horizontalen, die Ausformung bindenden Schenkel ausgeführt sind, um so eine einfache und zugleich wirksame Haltefunktion zu schaffen, wobei die Schenkel entsprechende Anfasungen, Abschrägungen oder Abrundungen zum einfachen Einhängen und Entnehmen der Aufbewahrungselemente aufweisen können.

Die Vorsprünge könnten beispielsweise einen kegelförmigen oder zylindrischen Abschnitt aufweisen. Besonders einfach ist jedoch die Herstellung einer Weiterbildung der Erfindung, bei welcher die Vorsprünge aus einem Flachmaterial, insbesondere Blech, bestehen und eine einheitliche Materialstärke aufweisen, um so die Halteschiene einschließlich der Vorsprünge und gegebenenfalls der Ausformungen in einem einzigen Arbeitsgang aus dem Blech herstellen, beispielsweise ausstanzen zu können.

Die Ausnehmungen sind entlang einer Geraden in gleichmäßigen Abständen in dem hinteren Rand der Aufbewahrungselemente angeordnet. Vorzugsweise bildet dieser Rand auch den oberen Abschluss des Aufbewahrungselements, sodass also die Ausnehmungen in dem hinteren Randbereich zugleich in einem oberen Randbereich des Aufbewahrungselements angeordnet sind.

Eine andere, ebenfalls besonders sinnvolle Ausführungsform der vorliegenden Erfindung wird dadurch erreicht, dass das Aufbewahrungselement mit einem Sichtfenster zur visuellen Überprüfung der korrekt eingehängten Position des Vorsprungs in der Ausnehmung in der Halteposition ausgestattet ist, welches beispielsweise als eine Durchbrechung oder durch einen transparenten bzw. transluzenten Abschnitt der Wandfläche des Aufbewahrungselements im Bereich der Ausnehmung realisiert werden kann. Eine fehlerhafte Anordnung der Aufbewahrungselemente in dem Laderaum, beispielsweise die Fixierung an lediglich einem einzigen Vorsprung, kann somit von der Serviceperson problemlos visuell erkannt und korrigiert werden. Selbstverständlich kann das Aufbewahrungselement auch großflächig oder vollständig aus einem transparenten Material oder aus einem Gitter bestehen.

Dabei ist es in der Praxis vorteilhaft, wenn die Aufbewahrungselemente stapelbar, insbesondere also als offene Behälter ausgeführt sind, sodass leere Aufbewahrungselemente platzsparend ineinander gestapelt werden können.

Eine andere, ebenfalls besonders zweckmäßige Abwandlung wird auch dann erreicht, wenn die Auflageschiene oder die Halteschiene zugleich eine Aufnahme für Zurrgurte aufweist, um so die Möglichkeit zur Fixierung sehr großer Ladegüter ohne ein geeignetes Aufbewahrungselement in die Auflageschiene zu integrieren, insbesondere also zusätzlich die Funktionalität einer an sich bekannten Zurrschiene bereitzustellen.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt jeweils in einer perspektivischen Darstellung in
- Fig. 1: mehrere in einem Laderaum eines Kraftfahrzeugs übereinander an Halte- und Auflageschienen fixierte Aufbewahrungselemente;
- Fig. 2: eine vergrößerte Ansicht eines der in Figur 1 gezeigten, an der Auflageschiene fixierten Aufbewahrungselementes;
- Fig. 3: eine Detailansicht der in Figur 1 gezeigten Halte- und Auflageschienen;
- Fig. 4: eine Detailansicht eines in Figur 1 gezeigten Aufbewahrungselements.

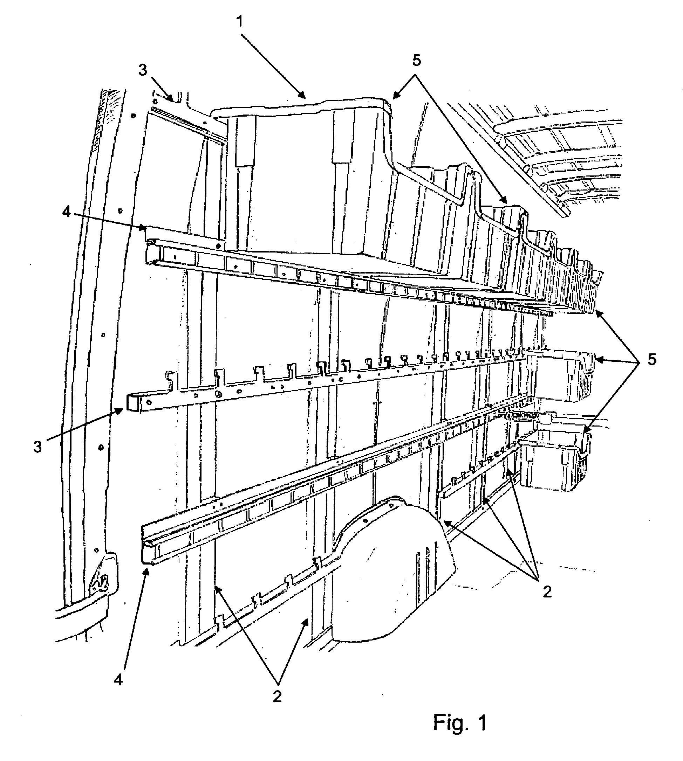

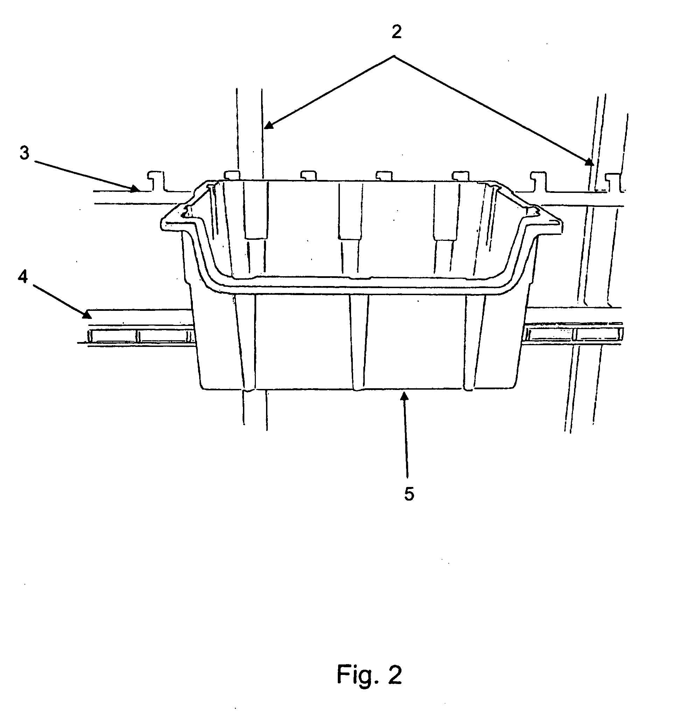

Figuren 1 und 2 zeigen eine Ansicht eines Laderaums eines nicht weiter dargestellten Kraftfahrzeugs aus verschiedenen Perspektiven. Im Inneren des Laderaums ist ein Aufbewahrungssystem 1 zu erkennen, welches an vertikalen Holmen 2 in verschiedenen Positionen fixierbare Halteschienen 3 sowie Auflageschiene 4 aufweist. An diesen Halteschienen 3 sowie Auflageschienen 4 sind verschiedene, offene Aufbewahrungselemente 5 eingehängt und für den Transport zuverlässig fixiert.

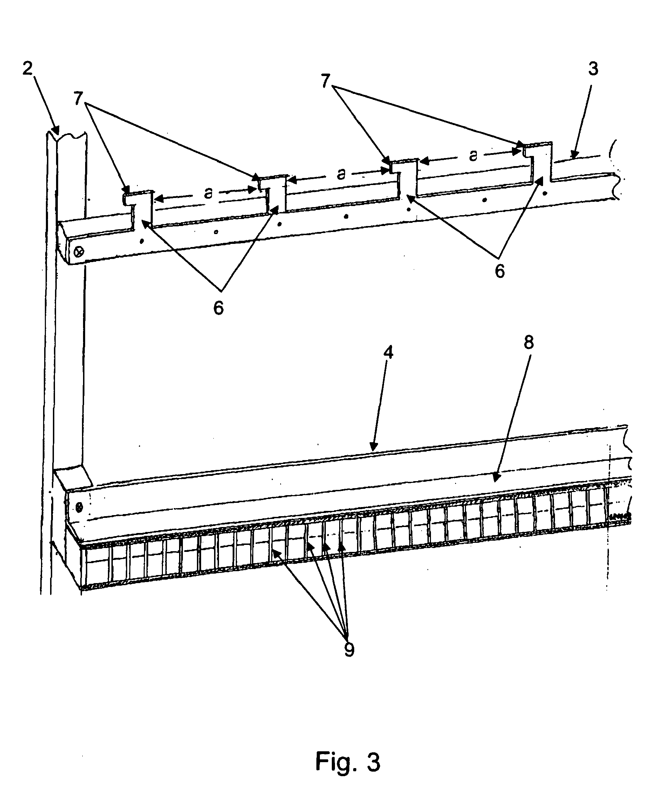

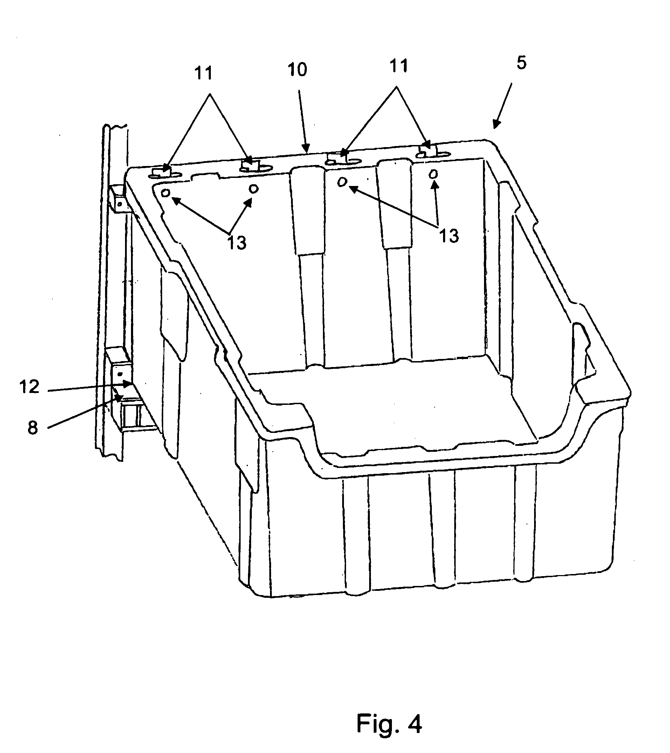

Die konstruktive Ausgestaltung der Halteschienen 3 sowie der Auflageschienen 4 wird anhand der Figur 3 näher erläutert, welche die an dem gemeinsamen vertikalen Holm 2 angeordnete Halteschienen 3 sowie Auflageschienen 4 in einer vergrößerten Ansicht zeigt. Die Halteschiene 3 hat mehrere in regelmäßigen Abständen a angeordnete, vertikal nach oben gerichtete Vorsprünge 6, die jeweils eine in Richtung des Fahrzeughecks weisende Ausformung 7 aufweisen. Diese als Abwinkelung ausgeführte Ausformung 7 bildet einen horizontalen Schenkel und besteht zusammen mit dem Vorsprung 6 aus einem flachen Blechzuschnitt einheitlicher Materlalstärke. Die Vorsprünge 6 greifen in der in Figur 2 dargestellten Position in Ausnehmungen 11 der Aufbewahrungselemente 5 ein, die in der Figur 4 verdeutlich sind. Dabei dient die Ausformung 7 dazu, bei einer beispielsweise unfallbedingten Belastung und der damit verbundenen Verschiebung des Aufbewahrungselements 5 nach vom, bei welcher die Ausformung 7 nunmehr einen in Figur 4 erkennbaren Randbereich 10 des Aufbewahrungselements 5 übergreift und somit eine Hinterschneidung bildet, eine vertikale Bewegung zu unterbinden und somit eine Transportsicherung zu erreichen. Die Aufbewahrungselemente 5 sind dabei während des Transports zusätzlich auf einer Auflagefläche 8 der Auflageschiene 4 abgestützt, um so eine zusätzliche Stabilisierung und eine Entlastung des oberen Randbereichs 10 des jeweiligen Aufbewahrungselements 5 zu erreichen. Die Auflageschiene 4 ist zusätzlich mit Aufnahmen 9 für nicht gezeigte Spanngurte ausgestattet, um so eine alternative oder auch ergänzende Fixiermöglichkeit insbesondere sperriger Ladegüter zu schaffen.

In Figur 4 ist ein einzelnes Aufbewahrungselement 5 dargestellt. Das Aufbewahrungselement 5 hat einen hinteren Randbereich 10, welcher zugleich einen oberen Abschluss bildet und in einer Reihe angeordnete, als Durchbrechungen ausgeführte Ausnehmungen 11 aufweist. Die Ausnehmungen 11 sind entsprechend den Abständen a der in Figur 3 gezeigten Vorsprünge 6 angeordnet, durch die ein einheitliches Rastermaß bestimmt ist. Die Ausnehmungen 11 schließen somit in der Halteposition jeweils einen Vorsprung 6 ein, wobei die Aufbewahrungselemente 5 mit ihrer Hinterkante 12 auf der Auflagefläche 8 der in Figur 2 erkennbaren Auflageschiene 4 aufliegen. Zur visuellen Überprüfung der ordnungsgemäßen Fixierung des jeweiligen Vorsprungs 6 in der Ausnehmung 11 ist jeder Ausnehmung 11 ein Sichtfenster 13 zugeordnet.

## Patentansprüche

1. Ein zur Anordnung in einem Laderaum eines Kraftfahrzeugs bestimmtes Aufbewahrungssystem (1) zumindest umfassend eine insbesondere horizontal fixierbare Halteschiene (3) mit in regelmäßigen Abständen (a) angeordneten, insbesondere vertikalen Vorsprüngen (6), zumindest eine Auflageschiene (4) mit einer horizontalen Auflagefläche (8) sowie mehrere Aufbewahrungselemente (5), insbesondere Behälter, mit zumindest zwei entlang einer Geraden in einem hinteren Randbereich (10) jedes Aufbewahrungselements (5) angeordneten Ausnehmungen (11), die so bemessen sind, dass die Ausnehmungen (11) in der Halteposition jeweils einen Vorsprung (6) einschließen und zugleich die Aufbewahrungselemente (5) auf der Auflagefläche (8) der Auflageschiene (4) aufliegen, **dadurch gekennzeichnet, dass** die Halteschiene (3) und die Auflageschiene (4) an vertikalen Holmen (2) beweglich, insbesondere verschiebbar angeordnet sind.

2. Aufbewahrungssystem (1) nach Anspruch 1, **dadurch gekennzeichnet, dass** die Ausnehmungen (11) jeweils eine Durchbrechung aufweisen.

3. Aufbewahrungssystem (1) nach den Ansprüchen 1 oder 2, **dadurch gekennzeichnet, dass** die Halteschiene (3) und die Auflageschiene (4) mittels des Holms (2) an einer Laderaumwand eines Kraftfahrzeugs fixierbar sind.

4. Aufbewahrungssystem (1) nach zumindest einem der vorhergehenden Ansprüche, **dadurch gekennzeichnet, dass** die Halteschiene (3) und/oder die Auflageschiene (4) in verschiedenen vertikalen Positionen festlegbar sind.

5. Aufbewahrungssystem (1) nach zumindest einem der vorhergehenden Ansprüche, **dadurch gekennzeichnet, dass** zumindest einzelne der Vorsprünge (6) eine in Richtung des Fahrzeughecks vorspringende Ausformung (7) aufweisen.

6. Aufbewahrungssystem (1) nach Anspruch 5, **dadurch gekennzeichnet, dass** zumindest einzelne der Vorsprünge (6) als Winkelstücke mit einem unteren vertikalen Schenkel und einem oberen horizontalen, die Ausformung (7) bildenden Schenkel ausgeführt sind.

7. Aufbewahrungssystem (1) nach Anspruch 5 oder 6, **dadurch gekennzeichnet, dass** die Vorsprünge (6) aus einem Flachmaterial, insbesondere Blech, bestehen und eine einheitliche Materialstärke aufweisen.

8. Aufbewahrungssystem (1) nach zumindest einem der vorhergehenden Ansprüche, **dadurch gekennzeichnet, dass** die Ausnehmungen (11) in dem hinteren Randbereich (10) zugleich in einem oberen Randbereich des Aufbewahrungselements (5) angeordnet sind.

9. Aufbewahrungssystem (1) nach zumindest einem der vorhergehenden Ansprüche, **dadurch gekennzeichnet, dass** das Aufbewahrungselement (5) mit einem Sichtfenster (13) zur visuellen Überprüfung der Position des Vorsprungs (6) in der Ausnehmung (11) in der Halteposition ausgestattet ist.

10. Aufbewahrungssystem (1) nach zumindest einem der vorhergehenden Ansprüche, **dadurch gekennzeichnet, dass** die Aufbewahrungselemente (5) stapelbar ausgeführt sind.

11. Aufbewahrungssystem (1) nach zumindest einem der vorhergehenden Ansprüche, **dadurch gekennzeichnet, dass** die Auflageschiene (4) und/oder die Halteschiene (3) zugleich eine Aufnahme (9) für ein Spannmittel, insbesondere für Gurtbänder, aufweist.

## Claims

1. Storage system (1) intended for arranging in a loading space of a motor vehicle, at least comprising an in particular horizontally fixable retaining rail (3) with in particular vertical projections (6) arranged at regular distances (a), at least one supporting rail (4) with a horizontal supporting surface (8), and a plurality of storage elements (5), in particular containers, with at least two recesses (11) which are arranged along a straight line in a rear edge region (10) of each storage element (5) and are dimensioned in such a manner that, in the retaining position, the recesses (11) each enclose a projection (6) and at the same time the storage elements (5) rest on the supporting surface (8) of the supporting rail (4), **characterized in that** the retaining rail (3) and the supporting rail (4) are arranged moveably, in particular displaceably, on vertical struts (2).

2. Storage system (1) according to Claim 1, **characterized in that** the recesses (11) each have an opening.

3. Storage system (1) according to Claim 1 or 2, **characterized in that** the retaining rail (3) and the supporting rail (4) are fixable on a loading space wall of a motor vehicle by means of the strut (2).

4. Storage system (1) according to at least one of the preceding claims, **characterized in that** the retaining rail (3) and/or the supporting rail (4) are securable in different vertical positions.

5. Storage system (1) according to at least one of the preceding claims, **characterized in that** at least individual projections of the projections (6) have a formation (7) projecting in the direction of the vehicle rear.

6. Storage system (1) according to Claim 5, **characterized in that** at least individual projections of the projections (6) are designed as angular pieces with a lower, vertical limb and an upper, horizontal limb forming the formation (7).

7. Storage system (1) according to Claim 5 or 6, **characterized in that** the projections (6) are composed of a flat material, in particular sheet metal, and have a uniform material thickness.

8. Storage system (1) according to at least one of the preceding claims, **characterized in that** the recesses (11) in the rear edge region (10) are arranged at the same time in an upper edge region of the storage element (5).

9. Storage system (1) according to at least one of the preceding claims, **characterized in that** the storage element (5) is equipped with a view window (13) for visually checking the position of the projection (6) in the recess (11) in the retaining position.

10. Storage system (1) according to at least one of the preceding claims, **characterized in that** the storage elements (5) are designed so as to be stackable.

11. Storage system (1) according to at least one of the preceding claims, **characterized in that** the supporting rail (4) and/or the retaining rail (3) at the same time have/has a receptacle (9) for a clamping means, in particular for belt straps.

## Revendications

1. Système de rangement (1) conçu pour être disposé dans un espace de chargement d'un véhicule automobile, comprenant au moins un rail de maintien (3) pouvant notamment être fixé en position horizontale, muni d'éléments en saillie (6) disposés à intervalles réguliers (a), notamment verticaux, au moins un rail d'appui (4) ayant une surface d'appui horizontale (8) ainsi que plusieurs éléments de rangement (5), notamment des récipients, comprenant au moins deux évidements (11) disposés le long d'une droite dans une zone de bordure arrière (10) de chaque élément de rangement (5), lesquels sont dimensionnés de telle sorte que les évidements (11), dans la position de maintien, entourent respectivement un élément en saillie (6) et, en même temps, les éléments de rangement (5) reposent sur la surface d'appui (8) du rail d'appui (4), **caractérisé en ce que** le rail de maintien (3) et le rail d'appui (4) sont disposés en mobilité, notamment de manière coulissante, sur des longerons verticaux (2).

2. Système de rangement (1) selon la revendication 1, **caractérisé en ce que** les évidements (11) présentent respectivement un percement.

3. Système de rangement (1) selon l'une des revendications 1 ou 2, **caractérisé en ce que** le rail de maintien (3) et le rail d'appui (4) peuvent être fixés à l'aide du longeron (2) à une paroi d'espace de chargement d'un véhicule automobile.

4. Système de rangement (1) selon au moins l'une des revendications précédentes, **caractérisé en ce que** le rail de maintien (3) et/ou le rail d'appui (4) peuvent être bloqués dans différentes positions verticales.

5. Système de rangement (1) selon au moins l'une des revendications précédentes, **caractérisé en ce qu'**au moins certains des éléments en saillie (6) présentent une protubérance (7) qui fait saillie en direction de l'arrière du véhicule.

6. Système de rangement (1) selon la revendication 5, **caractérisé en ce qu'**au moins certains des éléments en saillie (6) sont réalisés sous la forme de pièces coudées avec une branche verticale inférieure et une branche supérieure horizontale formant la protubérance (7).

7. Système de rangement (1) selon la revendication 5 ou 6, **caractérisé en ce que** les éléments en saillie (6) sont constitués d'un matériau plat, notamment de tôle, et présentent une épaisseur de matériau uniforme.

8. Système de rangement (1) selon au moins l'une des revendications précédentes, **caractérisé en ce que** les évidements (11), dans la zone de bordure arrière (10), sont en même temps disposés dans une zone de bordure supérieure de l'élément de rangement (5).

9. Système de rangement (1) selon au moins l'une des revendications précédentes, **caractérisé en ce que** l'élément de rangement (5) est équipé d'une ouverture d'inspection (13) pour le contrôle visuel de la position de l'élément en saillie (6) dans l'évidement (11) dans la position de maintien.

10. Système de rangement (1) selon au moins l'une des revendications précédentes, **caractérisé en ce que** les éléments de rangement (5) sont réalisés empilables.

11. Système de rangement (1) selon au moins l'une des revendications précédentes, **caractérisé en ce que** le rail d'appui (4) et/ou le rail de maintien (3) présentent en même temps un logement (9) pour un moyen de serrage, notamment pour des sangles.
